# EUROPEAN PATENT APPLICATION

(11) **EP 4 667 435 A1**
(43) Date of publication of application: **24.12.2025**
(21) Application number: 24183147.8
(22) Date of filing: 19.06.2024
(51) Int. Cl.: C04B 20/10, C04B 28/04, C04B 40/00

(54) **POWDER ADMIXTURE COMPRISING BIOCHAR**

(71) Applicant: Sika Technology AG, 6340 Baar (CH)
(72) Inventor: DIMITRAKOPOULOU, Ariadni Garyfalia Ira, 69226 Nussloch (DE); MADER, Katja, 76669 Bad Schönborn (DE)
(74) Representative: Sika Patent Attorneys

(57) **Abstract**

The present invention relates to a free-flowing powder composition comprising biochar as a carrier for admixture, especially a superplasticizer. The present invention also relates to the preparation method of such a free-flowing powder composition and its use for a mineral binder composition.

## Description

### Technical Field

The present invention relates to a free-flowing powder composition comprising biochar as a carrier for admixture, especially for a superplasticizer. The present invention also relates to the preparation method of such free-flowing powder composition and its use for mineral binder composition.

### Background of the invention

In recent years, the construction industry has dedicated substantial resources to investigating methods for decarbonizing its products and processes. To diminish the carbon footprint of their formulations, mortar developers and concrete manufacturers seek raw materials with a reduced CO₂ footprint or, ideally, materials with carbon-sinking potential. What is meant by carbon-sinking potential is that these raw materials absorb more CO₂ in their lifetime than they release to the atmosphere. Olivine and biochar are examples of materials with carbon-sinking potential. Typically, olivine and biochar are used as inert fillers, and have not shown any performance-related properties.

Cementitious composition comprising biochar, either as a partial sand replacement (US2023002276, HeroSand, LLC) or a partial replacement for cement and/ or the aggregates (DE102022002721, Körning H.O., Preuss A.), are already known. Moreover, WO2023156028 (Zindel United Holding AG) teaches about introducing activator with a hydraulic effect, such as lime or pozzolane, into biochar pores for use in producing concrete or mortar.

Certain materials in powder form can serve as carriers for concrete admixtures by providing a dry, finely ground medium in which the admixture can be dispersed and transported. Examples of such materials include quartz sand, fine calcium carbonate or other inert materials, such as diatomaceous earth. However, none of the aforementioned carrier agents have carbon-capturing or carbon-sinking properties.

Therefore, there is still a need for admixture carriers for mineral binder compositions with carbon-capturing or carbon-sinking properties, especially if such carriers do not negatively influence the performance of the admixture, or, preferably, improve the performance of said admixture.

### Summary of the invention

It is an objective of the present invention to provide a free-flowing powder composition for use as an admixture for mineral binder composition. Preferably, the present invention provides a free-flowing powder composition suitable to increase the workability of the mineral binder composition. More preferably, the present invention provides a free-flowing powder composition suitable to decrease the carbon footprint of a mineral binder composition. It is another objective of the present invention to provide a method for the preparation of such free-flowing powder composition.

It has surprisingly been found that the objective of the present invention is solved by the subject matter of claim 1. It is thus at the core of the present invention to use biochar as a carrier of functional molecules for mineral binder compositions. Surprisingly, a synergistic effect has been found when using a polycarboxylate ether superplasticizer on the biochar carrier.

Further aspects of the present invention are the subject of independent claims. Preferred embodiments are the subject matter of dependent claims.

### Ways to carry out the invention

In a first aspect the present invention relates to a free-flowing powder composition comprising biochar and at least one admixture.

In the sense of this invention, free-flowing powder means a solid in a form of a powder that is sufficiently dry so that it does not contain any lump or agglomerate or contains a few of the same so that it can be used in an industrial manner for dosage and incorporation in dry mix formulation without using special lump breaker equipment. In other words, in the sense of the present invention, a free-flowing powder refers to a powder that may contain lumps or agglomerates which are disintegrating during standard mixing process, e.g. in a ribbon mixer.

The free-flowing powder composition of the present invention comprises biochar and at least one admixture. Biochar, in the present context, is a carbon-rich product that remains after biomass is thermodynamically converted in the absence or limited presence of oxygen (a process known as pyrolysis). Through pyrolysis, the carbon stored in the biomass becomes locked in the biochar. The biomass used to produce biochar of the present invention is preferably sourced from a biomass waste, for example wood chips, spelt husks, straw pellets, as well as seeds and shells.

Admixture, in the present context, is a substance added either to a dry mortar composition or a dry grout composition or during the mixing of dry mortar or dry grout or concrete with water. Said admixture is used in small quantities (up to 5 wt. % relative to the total amount of the mineral binder in the mineral binder composition) to alter the properties of the fresh or hardened mortar or concrete.

Dry mortar and dry grout, in the present context, refer to pre-mixed combinations of fine aggregates, cement and various additives used in construction. They are produced in a factory and delivered in bags or bulk. To be used, they simply need to be mixed with water in a proper ratio to form the ready-to-use mixture. Generally, mortars are typically used to bind surfaces, whereas grouts are used to fill voids.

A mineral binder composition as used herein refers to materials that comprise at least one mineral binder. A mineral binder composition can be, for example, a mortar composition, a grout composition or a concrete composition. A mineral binder, in the context of the present invention, is a binder, which in the presence of water reacts in a hydration reaction to form solid hydrates or hydrate phases. This can be, for example, a hydraulic binder (e.g. cement or hydraulic lime), a latent hydraulic binder (e.g. slag), a pozzolanic binder (e.g. fly ash) or a nonhydraulic binder (gypsum plaster or white lime).

In the sense of this invention, admixtures can be any typically used in the concrete or mortar industry. Typical admixtures include plasticizers, thickeners, retarders, air-entrainers, de-aerating agents, defoamers, corrosion inhibitors, anti-caking agents, antioxidants, expansion producing additives, pigments, strength enhancers, waterproofing additives, alkali-aggregate reaction inhibitors, chromate reducers, and/or anti-microbial agents.

According to embodiments, the free-flowing powder composition of the present invention comprises biochar and at least one admixture for a mineral binder composition.

In one advantageous embodiment, a free-flowing powder composition comprises biochar and at least two concrete or mortar or grout admixtures. For example, a free-flowing powder composition comprises biochar, plasticizer and retardant.

According to embodiments, the free-flowing powder composition is characterized in that the biochar has a particle size D50 of 0.001 - 2 mm, preferably 0.001 - 0.6 mm or 0.1 - 2 mm or 0.25 - 0.6 mm or 0.1 - 0.25 mm, the most preferably 0.5 - 0.6 mm as determined by sieve analysis according to EN 12192-1:2002 or EN 933-1:2012.

According to further embodiments, said admixture is selected from plasticizers, thickeners, retarders, air-entrainers, accelerators, anti-caking agents, antioxidants, de-aerating agents, defoamers, corrosion inhibitors, expansion producing additives, pigments, strength enhancers, waterproofing additives, alkali-aggregate reaction inhibitors, chromate reducers, and/or anti-microbial agents.

According to preferred embodiment, said admixture is a plasticizer. Suitable plasticizers can be any known to the person skilled in the art. Examples include lignosulfonates, naphthalene sulfonates, melamine sulfonates and polycarboxylate ethers. Especially preferred are polycarboxylate ethers.

Suitable thickeners can be any known to the person skilled in the art. Examples include cellulose ethers, polyacrylamides and alkali swellable polymers.

Suitable retarders can be any known to the person skilled in the art. Examples include lignosulfonates, citric acid, tartaric acid, sodium gluconate, sodium phosphate, calcium phosphate and sodium borate.

Suitable air-entrainers agents can be any known to the person skilled in the art. Examples include natural resins, synthetic ionic or non-ionic surfactants (such as sodium lauryl sulfate) and fatty acid salts.

Suitable defoamers agents can be any known to the person skilled in the art. Examples include polypropylene glycols, polyalkylene glycols, triisobutyl phosphate, ethoxylated alcohols (such as ethoxylated acetylenic diols), polyether derivatives of a fatty acids, mineral oils and silicone defoamers.

Suitable corrosion inhibitors can be any known to the person skilled in the art. Examples include polyols, especially ethylene glycol, diethylene glycol, triethylene glycol, propylene glycol, butylene glycol, pentylene glycol, neopentyl glycol and/or hexylene glycol. Further examples include sodium nitrite, calcium nitrite, lithium nitrate, sodium monofluorophosphate, sodium chromate, potassium chromate, sodium phosphate. Still further examples include amine-based inhibitors, such as alkanolamine, monoethanolamine, diethanolamine and triethanolamine.

Suitable anti-caking agents can be any known to the person skilled in the art. Examples for anti-caking agents include powdered cellulose, magnesium stearate, calcium carbonate, dolomite, clay, kaolin, vermiculite, bentonite, talc, slag, fly ash, silicates or aluminosilicates, and silicon dioxide, such as for example fumed silica, precipitated silica, silica gels or silica sols.

Suitable antioxidants can be any known to the person skilled in the art. Examples for antioxidants are for example disclosed in WO00/17263 (SKW Trostberg AG) and include alkylated monophenols, alkylated hydrochinones, alkylidene bisphenols, hydroxylated benzyls, phenol-thiodiphenyl ethers, acylaminophenols, phenolic esters, and phenolic amides.

According to further embodiments, said admixture is a superplasticizer, preferably a polycarboxylate ether.

Polycarboxylate ethers (PCE) are copolymers of ethylenically unsaturated carboxylic acids and ethylenically unsaturated alcohol alkoxylates. They have been known for many years as dispersion aids for aqueous dispersions, especially for aqueous dispersions of mineral binders. PCE act as superplasticizers and reduce the water needed to achieve a certain level of fluidity of a given uncured mineral material. A reduction of water in mineral materials is desirable as it leads to less segregation of solid components in the uncured material and to an increased compressive strength of the cured material.

Copolymers of the present invention are obtained by copolymerization of the respective monomers. Copolymerization is a process known to a person skilled in the art. Especially, radical polymerization and polymer analogous esterification of different monomers are preferred. In one advantageous embodiment, conventional free radical polymerization (FRP) is preferred. Suitable conditions for a conventional free radical polymerization are for example described in example 1-1 of EP 1103570 (Nippon Shokubai Chem Ind). In another advantageous embodiment, polymer analogous esterification (PAE) is preferred. Suitable conditions for a process of polymer analogous esterification are for example described in example 1 of WO 2012/076596 (Sika Technology AG). According to yet another advantageous embodiment, controlled radical polymerization (CRP) is preferred. Suitable conditions for a process of controlled radical polymerization are for example described in example 1.2 or 1.5 of WO2017050904A1 (Sika Technology AG).

Copolymers of the present invention can be statistical copolymers or have a block-wise or gradient arrangement of the monomers. Statistical copolymers are preferred.

The molecular weight (Mw) of a copolymer of the present invention can be measured by GPC using PEG as a standard and may be in the range of 5000 - 200000 g/mol, preferably 10000 - 150000 g/mol.

According to preferable embodiments, a polycarboxylate ether copolymer has a molecular weight Mw between 3000 g/mol 6000 g/mol.

According to further embodiments, copolymers of the present invention can be in the form of a dispersion or a solution in a liquid, preferably in water. According to further embodiments, copolymers of the present invention can be in the form of a powder. Preferably, copolymers of the present invention are in a form of dispersion in water.

According to further embodiments, said admixture is a polycarboxylate ether synthesized via free radical polymerization.

In one advantageous embodiment, said admixture is a polycarboxylate ether synthesized via conventional free radical polymerization.

According to further embodiments, said polycarboxylate comb copolymer comprising at least one monomeric unit of the structure (I) 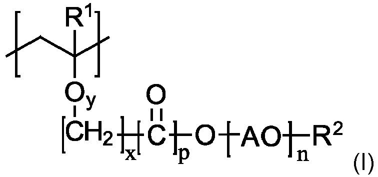 where
R¹ = H, CH₃,
R² = H, C1-C12 alkyl,
A independently of each other is an alkylene group with 2 - 8 C atoms,
x = 0, 1 or 2,
y = 0, 1,
p = 0, 1,
n = 10 - 160, preferably 90 - 130, most preferably 90 - 115,
and monomeric units of the structure (II) 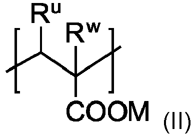 where
   R^{u} = H, CH₃,
   R^{w} = H, CH₃,
   M is selected from H, alkali metal, alkali earth metal, ammonium or organic ammonium group, and
   having the molar ratios of the monomers (I) : (II) in the range of 1 - 5 : 1 - 30, preferably 1 - 3 : 5 - 15, most preferably 1 - 1.5 : 1.5 - 8.

In a particularly preferred embodiment, the present invention relates to said polycarboxylate comb copolymer comprising at least one monomeric unit of the structure (I) 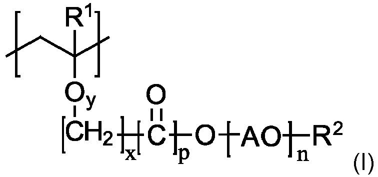 where
R¹ = CH₃,
R² = H,
A is ethylene group,
x = 1,
Y = 0,
P = 0,
n = 90 - 115, preferably 90-95,
and monomeric units of the structure (II) 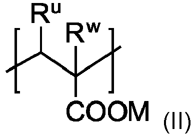 where
   R^{u} = H,
   R^{w} = H,
   M = H, and
   having the molar ratios of the monomers (I) : (II) in the range of 1 - 1.5 : 1.5 - 8, preferably 1 : 4 - 5.

In another advantageous embodiment, said admixture is a polycarboxylate ether synthesized via polymer analogous esterification.

In yet another advantageous embodiment, said admixture is a polycarboxylate ether synthesized via controlled radical polymerization.

According to further embodiments, the admixture constitutes at least 5 wt. %, preferably at least 10 wt. %, more preferably at least 20 wt. %, most preferably at least 25 wt. % relative to the total mass of the free-flowing composition.

Admixture, in the present context, refers to the active component of the admixture. The active component, in the present context, is the substance primarily responsible for the desired properties or effects of the composition. This component typically determines the function or purpose of the chemical mixture. In some cases, a chemical composition may contain several components, but the active component is the one that plays the central role in achieving the intended result. For example, in a cement plasticizer, the active component might be a polycarboxylate ether.

An admixture can be in the form of a dispersion or solution, preferably in water.

All features and embodiments as described above, also applied to this aspect.

In another aspect the present invention relates to a method for the preparation of the free-flowing powder composition as described above, comprising a step of intermixing an admixture and biochar, wherein preferably said admixture is in the form of a solution or dispersion, preferably in water.

The intermixing, in the present context, refers to the process of combining different substances or elements together to create a homogeneous or nearly homogeneous mixture. The intermixing process can be done manually or by using mixing equipment. Some of the techniques of intermixing admixture and biochar are spraying, pipetting, coating and encapsulation.

It is an advantage of the present invention that admixtures, which are only available as liquid, can be used as a powder when intermixed with biochar. Therefore, preparation of dry mortar and/ or dry grout pre-mixes comprises such admixtures is possible.

All features and embodiments as described above, also applied to this aspect.

In another aspect the present invention relates to a method for the improvement of a mineral binder composition comprising a step of intermixing a free-flowing powder composition prepared as described above and a mineral binder composition.

Improvement, in the present context, refers to enhancing specific characteristics of a mineral binder composition to meet desired performance criteria, which are set by the standards and/ or customers. Such properties may include workability of a fresh mix, early strength, long-term strength, durability, setting time, permeability and resistance to environmental factors such as freeze-thaw cycles or chemical attacks.

According to preferred embodiment, said free-flowing powder composition comprises the admixture within a range of 0.0001 to 5 wt. %, preferably 0.01 to 5 wt. %, more preferably 0.01 to 2 wt. %, most preferably 0.1 to 2 wt. %, relative to the total amount of the mineral binder in the mineral binder composition.

According to particularly preferred embodiment, the present invention relates to a method for the workability improvement of a mineral binder composition comprising a step of intermixing a free-flowing powder composition prepared as described above and a mineral binder composition.

All features and embodiments as described above, also applied to this aspect.

In another aspect the present invention relates to a mineral binder composition obtained by a method as described above.

According to embodiments, the present invention relates to concrete and/ or mortar and/ or grout obtained by a method as described above.

According to still further embodiments, the mineral binder composition comprises admixture within a range of 0.0001 to 5 wt. %, preferably 0.01 to 5 wt. %, more preferably 0.01 to 2 wt. %, most preferably 0.1 to 2 wt. %, relative to the total amount of the mineral binder in the mineral binder composition.

In a particularly preferred embodiment, said free-flowing composition comprises admixture within a range of 0.1 to 2 wt. %, relative to the total amount of the mineral binder in the mineral binder composition and the active component of the admixture constitutes at least 25 wt. % relative to the total mass of the free-flowing composition.

All features and embodiments as described above, also applied to this aspect.

In another aspect the present invention relates to the use of said free-flowing powder composition, as an admixture for a mineral binder composition.

All features and embodiments as described above, also applied to this aspect.

In another aspect the present invention relates to the use of said free-flowing powder composition to improve a workability of said mineral binder composition.

Workability, in the present context, refers to the ease with which the mineral binder composition can be mixed, placed, compacted and finished during construction. It's a critical property because it affects not only the efficiency of construction operations but also the quality and durability of the finished structure. There are a few ways in which workability of a mineral binder composition can be measured. For example, following the test procedure of the standard EN 13391:2004.

All features and embodiments as described above, also applied to this aspect.

In another aspect the present invention relates to the use of said free-flowing powder composition to reduce the carbon footprint of a mineral binder composition, especially to reach a carbon-negative footprint of a mineral binder composition.

According to preferred embodiments, said free-flowing powder composition can be used to reduce the carbon footprint of concrete and/ or mortar and/ or grout mineral, especially to reach a carbon-negative footprint of concrete and/ or mortar and/ or grout.

A carbon-negative footprint of a mineral binder composition, in the present context, means that the production or use of a mineral binder composition removes more carbon dioxide from the atmosphere than it emits or generates, resulting in a net reduction of CO₂ levels.

All features and embodiments as described above, also applied to this aspect.

In another aspect the present invention relates to the use of said free-flowing composition in the mineral binder composition which comprises Portland cement.

All features and embodiments as described above, also applied to this aspect.

### Examples

### Preparation of polymer P1 via FRP

330 g of water, 330 g of methallyl polyethylene glycol (OH-terminated, Mw = 2400 g/mol), 44.17 g of acrylic acid, 102 g of a 16% aqueous solution of NaOH, 1.5 g of a 10% aqueous solution of Fe(ll)SO4 · 7 H2O, and 2 g sodium hypophosphite were added into a reaction vessel with a stirrer.

Then 10 g of a 30% aqueous hydrogen peroxide solution and 4 g of a 5% aqueous rongalite solution were added dropwise at a temperature of 20°C - 35°C over a period of 70 min with stirring.

After the end polymerization reaction, a clear, viscous solution of copolymer P1 was obtained. The molar ratio of carboxylic group to side chains of P1 was 4.46.

### Preparation of polymer P2 via PAE

92 g of a 50 w% aqueous solution of a mixture of polymethacrylic and acrylic acid (1:1 molar ratio) and 7.5 g 50 w% sulfuric acid were placed in a glass reactor fitted with a thermometer, stirrer, a gas inlet tube, and a distillation assembly. The solution was heated to 70°C and 300 g of methoxy-terminated polyethylene glycol with Mw = 3000 g/mol was added. The mixture was heated up under a steady stream of nitrogen and kept at 165°C. After stirring at this temperature for 6 h, the mixture was allowed to cool to room temperature. The pH of the resulting mixture was approx. 3.

### Preparation of polymer P3 via CRP

Polymer P3 was prepared according to the method described in WO2019228883A1 (Sika Technology AG), see p. 24, I. 1-16.

### Preparation of free-flowing powder composition

The free-flowing powder composition was prepared by pipetting an aqueous solution of PCE on a biochar carrier. The wt. % of active matter in the free-flowing powder composition was between 25 and 25.25 wt. %. For example, 10.1 g of a free-flowing powder composition of 25.25 wt. % would consist of 5.1 g of aqueous PCE solution (wt. % = 50) and 5 g of biochar.

The reference compositions were prepared by pipetting an aqueous solution of PCE on other types of inorganic carriers: calcium carbonate, diatomaceous earth, sand and olive pits flour. For each sample, 5 g of carrier were used. The wt. % of active matter in composition (inorganic carrier and PCE solution) is disclosed in Table 6.

### Preparation of mortar comprising free-flowing powder composition

2000 g of dry mixes were prepared by thoroughly mixing the dry materials (cement and sand) as indicated in below Tables 2 - 5 on a V mixer until visually homogeneous. Water and free-flowing powder composition were then added in the amounts as indicated in below Tables 2 - 5 and mixing continued for an additional 5 minutes in a Hobart mixer.

The free-flowing powder composition was not added to the reference specimens. Instead, pure biochar carrier without PCE or only pure PCE at the corresponding dosage were added together with water.

### Testing of mortar comprising free-flowing powder composition

The slump flow of the mortar compositions was measured according to standard 1015-3:2007 at 5, 30 and 60 minutes after the end of mixing.

The following Table 1 provides an overview of raw materials used.

**Table 1:**

| | |
|---|---|
| | |
| PCE | P1 (synthesized via FRP), P2 (synthesized via PAE) or P3 (synthesized via CRP) |
| Biochar | 2 fractions: 0 - 0.6 mm (sieved to 0.125 - 0.25 mm, 0.25 - 0.5 mm, 0.5 - 0.6 mm) and 0.1 - 2.0 mm |
| Cement | CEM I, 42.5 R |
| Sand | Laboratory sand, particle size: 0 - 2 mm |

The following Table 2 provides a comparison of a mortar formulation comprising a free-flowing powder composition of the present invention (based on FRP copolymer, F-1) with the non-inventive mortar compositions.

**Table 2:**

| | Ref. 1 | Ref.2 | Ref. 3 | F-1 |
|---|---|---|---|---|
| PCE | | | P1 | P1 |
| Biochar particle size D50 [mm] | - | 0-0.6 | - | 0-0.6 |
| Biochar (wt. % in mortar) | - | 0.136 | - | - |
| Free-flowing powder composition (wt. % in mortar) | - | - | - | 0.136 |
| Cement [g] | 571.4 | 571.4 | 571.4 | 571.4 |
| Sand [g] | 1428.6 | 1427.3 | 1428.6 | 1423.2 |
| Water [g] | 285.7 | 285.7 | 284.1 | 285.7 |
| Pure PCE dosage (wt. % active matter on binder) | 0 | - | 0.12 | - |
| Flow 5 min [mm] | 182 | 158 | 238 | 230 |
| Flow 30 min [mm] | 173 | 154 | 227 | 229 |
| Flow 60 min [mm] | 170 | 153 | 226 | 218 |

| | | | | |
|---|---|---|---|---|
| n.d.: not defined | | | | |

Examples Ref.1, Ref.2 and Ref.3 in Table 2 are comparative examples. Example F-1 in Table 2 is according to the present invention. The total amount of PCE relative to binder is the same in examples Ref.3 and F-1. The slump flow of a mortar composition comprising PCE copolymer (synthesized via FRP) on the biochar carrier according to the present invention (F-1) is comparable to the slump flow of mortar comprising the same dosage of PCE without a biochar carrier (cf. Ref.3).

The following Table 3 provides a comparison of a mortar formulation comprising a free-flowing powder composition of the present invention (based on PAE copolymer, P-1) with the non-inventive mortar compositions.

**Table 3:**

| | Ref.1 | Ref.5 | Ref.6 | P-1 |
|---|---|---|---|---|
| PCE | - | - | P2 | P2 |
| Biochar particle size D50 [mm] | - | 0-0.6 | - | 0-0.6 |
| Biochar (wt. % in mortar) | - | 0.229 | - | - |
| Free-flowing powder composition (wt. % in mortar) | - | - | - | 0.229 |
| Cement [g] | 571.4 | 571.4 | 571.4 | 571.4 |
| Sand [g] | 1428.6 | 1427.3 | 1428.6 | 1427.3 |
| Water [g] | 285.7 | 285.7 | 284.55 | 285.7 |
| Pure PCE dosage (wt. % active matter on binder) | 0 | - | 0.2 | - |
| Flow 5 min [mm] | 182 | 167 | 238 | 245 |
| Flow 30 min [mm] | 173 | 157 | 240 | 243 |
| Flow 60 min [mm] | 170 | 153 | 244 | 240 |

| | | | | |
|---|---|---|---|---|
| n.d.: not defined | | | | |

Examples Ref.1, Ref.5 and Ref.6 in Table 3 are comparative examples. Example P-1 in Table 3 is according to the present invention. The total amount of PCE relative to binder is the same in examples Ref.6 and P-1. The slump flow of a mortar composition comprising PCE copolymer (synthesized via PAE) on the biochar carrier according to the present invention (P-1) is comparable to the slump flow of mortar comprising the same dosage of PCE without a biochar carrier (cf. Ref.6).

The following Table 4 provides a comparison of a mortar formulation comprising a free-flowing powder composition of the present invention (based on CRP copolymer, C-1) with the non-inventive mortar compositions.

**Table 4:**

| | Ref.1 | Ref.7 | Ref.8 | C-1 |
|---|---|---|---|---|
| PCE | - | - | P3 | P3 |
| Biochar particle size D50 [mm] | - | 0-0.6 | - | 0-0.6 |
| Biochar (wt. % in mortar) | - | 0.183 | - | - |
| Free-flowing powder composition (wt. % in mortar) | - | - | - | 0.183 |
| Cement [g] | 571.4 | 571.4 | 571.4 | 571.4 |
| Sand [g] | 1428.6 | 1425.0 | 1428.6 | 1426.8 |
| Water [g] | 285.7 | 285.7 | 284.1 | 285.7 |
| Pure PCE dosage (wt. % active matter on binder) | 0 | - | 0.16 | - |
| Flow 5 min [mm] | 182 | 164 | 216 | 257 |
| Flow 30 min [mm] | 173 | 154 | 197 | 247 |
| Flow 60 min [mm] | 170 | 153 | 187 | 238 |

| | | | | |
|---|---|---|---|---|
| n.d.: not defined | | | | |

Examples Ref.1, Ref.7 and Ref.8 in Table 4 are comparative examples. Example C-1 in Table 4 is according to the present invention. The total amount of PCE relative to binder is the same in examples Ref.8 and C-1. The slump flow of a mortar composition comprising PCE copolymer (synthesized via CRP) on the biochar carrier according to the present invention (C-1) is significantly higher than the slump flow of mortar comprising the same dosage of PCE without a biochar carrier (cf. Ref.8).

The following Table 5 provides a comparison of mortar formulations comprising a free-flowing powder composition of the present invention (based on FRP copolymer) applied on the biochar carriers of different particle sizes.

**Table 5:**

| | Ref.3 | F-1 | F-2 | F-3 | F-4 | F-5 |
|---|---|---|---|---|---|---|
| PCE | P1 | P1 | P1 | P1 | P1 | P1 |
| Biochar particle size D50 [mm] | - | 0-0.6 | 0.1 - 0.25 | 0.25-0.5 | 0.5 - 0.6 | 0.1 -2 |
| Free-flowing powder composition (wt. % in mortar) | - | 0.136 | 0.136 | 0.136 | 0.136 | 0.136 |
| Cement [g] | 571.4 | 571.4 | 571.4 | 571.4 | 571.4 | 571.4 |
| Sand [g] | 1428.6 | 1427.3 | 1427.9 | 1423.2 | 1423.2 | 1423.2 |
| Water [g] | 284.1 | 285.7 | 285.7 | 285.7 | 285.7 | 285.7 |
| Pure PCE dosage (wt. % active matter on binder) | 0.12 | - | - | - | - | - |
| Flow 5 min [mm] | 238 | 230 | 250 | 233 | 230 | 238 |
| Flow 30 min [mm] | 227 | 229 | 245 | 239 | 238 | 236 |
| Flow 60 min [mm] | 226 | 218 | 241 | 230 | 237 | 233 |

| | | | | | | |
|---|---|---|---|---|---|---|
| n.d.: not defined | | | | | | |

In all examples (Ref.3 and F1 to F5) the total amount of PCE relative to binder is the same.

Example Ref.3 is a comparative example. Examples F-1 to F-5 in Table 4 are according to the present invention. All of the inventive mortar samples presented in Table 4 comprise PCE copolymer in the same dosage but intermixed with a biochar carrier of different particle size D50. The highest slump flow of mortar was obtained when biochar of a particle size of 0-0.25 mm was used as a carrier for the PCE.

The following Table 6 provides a comparison of biochar with other inorganic carriers.

**Table 6:**

| | S-1 | S-2 | S-3 | S-4 | S-5 |
|---|---|---|---|---|---|
| Carrier type | Biochar | Calcium carbonate | Diatomaceous earth | Sand | Olive pits flour |
| Particle size D50 | 0.06 mm | 23 µm | 9.1 µm | 0.22 mm | 48.5 µm |
| PCE | P1 | P1 | P1 | P1 | P1 |
| wt. % active matter | 25.25 | 11.5 | 25.25 | 11.8 | 25.25 |

The successful formulation of a free-flowing powder composition comprising 25.25 wt. % PCE was only achieved using biochar as a carrier. In contrast, when calcium carbonate sand was used, the mixture became excessively wet after the addition of half the intended PCE amount, preventing further application. Diatomaceous earth also proved unsuitable, as it became lumpy and the PCE remained on its surface without penetrating. Similarly, olive pit flour did not absorb the PCE into its pores and merely became wet.

## Claims

1. A free-flowing powder composition comprising biochar and at least one admixture.

2. The free-flowing powder composition according to claim 1, **characterized in that** the biochar has a particle size D50 of 0.001 - 2 mm, preferably 0.001 - 0.6 mm or 0.1 - 2 mm or 0.25 - 0.6 mm or 0.1 - 0.25 mm, the most preferably 0.5 - 0.6 mm as determined by sieve analysis according to EN 12192-1:2002 or EN 933-1:2012.

3. The free-flowing powder composition according to at least one of the preceding claims, wherein said admixture is selected from plasticizers, thickeners, retarders, air-entrainers, accelerators, anti-caking agents, antioxidants, de-aerating agents, defoamers, corrosion inhibitors, expansion producing additives, pigments, strength enhancers, waterproofing additives, alkali-aggregate reaction inhibitors, chromate reducers, and/or anti-microbial agents.

4. The free-flowing powder composition according to at least one of claims 1 or 2, wherein said admixture is a superplasticizer, preferably a polycarboxylate ether.

5. The free-flowing powder composition according to claim 4, wherein said admixture is a polycarboxylate ether synthesized via free radical polymerization.

6. The free-flowing powder composition according to any of claims 4 or 5, wherein said polycarboxylate comb copolymer comprising at least one monomeric unit of the structure (I) 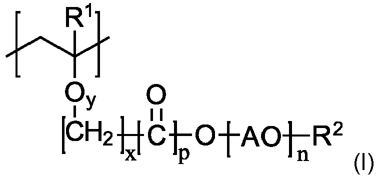 where
R¹ = H, CH₃,
R² = H, C1-C12 alkyl,
A independently of each other is an alkylene group with 2 - 8 C atoms,
x = 0, 1 or 2,
y = 0, 1,
p = 0, 1,
n = 10 - 160, preferably 90 - 130, most preferably 90 - 115,
and monomeric units of the structure (II) 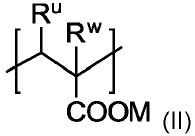 where
R^{u} = H, CH₃,
R^{w} = H, CH₃,
M is selected from H, alkali metal, alkali earth metal, ammonium or organic ammonium group, and
having the molar ratios of the monomers (I) : (II) in the range of 1 - 5 : 1 - 30, preferably 1 - 3 : 5 - 15, most preferably 1 - 1.5 : 1.5 - 8.

7. The free-flowing powder composition according to at least one of the preceding claims, wherein the admixture constitutes at least 5 wt. %, preferably at least 10 wt. %, more preferably at least 20 wt. %, most preferably at least 25 wt. % relative to the total mass of the free-flowing composition.

8. Method for the preparation of the free-flowing powder composition according to any of the preceding claims, comprising a step of intermixing an admixture and biochar, wherein preferably said admixture is in the form of a solution or dispersion, preferably in water.

9. Method for the improvement of a mineral binder composition comprising a step of intermixing a free-flowing powder composition as claimed in any of claims 1 - 7 or prepared in a method as claimed in claim 8 and a mineral binder composition.

10. Mineral binder composition obtained by a method as claimed in claim 9.

11. The mineral binder composition according to claim 10, wherein the composition comprises the admixture within a range of 0.0001 to 5 wt. %, preferably 0.01 to 5 wt. %, more preferably 0.01 to 2 wt. %, most preferably 0.1 to 2 wt. %, relative to the total amount of the mineral binder in the mineral binder composition.

12. Use of the free-flowing powder composition according to any of the claims 1 to 7, as an admixture for a mineral binder composition.

13. The use of the free-flowing powder composition according to any of the claims 1 to 7, to improve the workability of a mineral binder composition.

14. The use of the free-flowing powder composition according to any of the claims 1 to 7, to reduce the carbon footprint of a mineral binder composition, especially to reach a carbon-negative footprint of a mineral binder composition.

15. The use of the free-flowing composition as claimed in at least one of the claims 12 to 14, **characterized in that** the mineral binder composition comprises Portland cement.
